Europäisches Patentamt

European Patent Office

Office européen des brevets

(11) Veröffentlichungsnummer: **0 309 442**
**A1**

## (12) EUROPÄISCHE PATENTANMELDUNG

(21) Anmeldenummer: 88890242.6

(22) Anmeldetag: 22.09.88

(51) Int. Cl.⁴: **F 16 J 9/04**
F 16 C 33/26

(30) Priorität: 24.09.87 AT 2425/87

(43) Veröffentlichungstag der Anmeldung:
29.03.89 Patentblatt 89/13

(84) Benannte Vertragsstaaten:
AT BE CH DE ES FR GB IT LI LU NL SE

(71) Anmelder: Otto Bock Orthopädische Industrie Besitz-
und Verwaltungs-Kommanditgesellschaft
Industriestrasse
D-3428 Duderstadt (DE)

(72) Erfinder: Horvath, Eduard
Kaiserstrasse 39
A-1070 Wien (AT)

(74) Vertreter: Itze, Peter, Dipl.-Ing. et al
Patentanwälte Casati, Wilhelm, Dipl.-Ing. Itze, Peter,
Dipl.-Ing. Amerlingstrasse 8
A-1061 Wien (AT)

(54) Gleitdichtung.

(57) Dichtungsanordnung zum Abdichten zylindrisch gekrümmter, in bezug auf die Dichtung bewegter Flächen, wobei
zwecks Erzielung einer guten Dichtwirkung und einer trotz
geringer Passung hoher Wärmebeanspruchung die Dichtung
durch einen etwa schraubenlinienartig verlaufenden, im Bereich
der Anlage an die Gegenfläche abgeflachten, mehrfach umgewundenen, elastischen Teil (15) gebildet ist, der in eine etwa
schraubenlinienartig verlaufende, mehrfach umlaufende Nut (6)
eingelegt ist.

FIG. 2

**Beschreibung**

## Gleitdichtung

Die Erfindung bezieht sich auf eine Dichtungsanordnung zum Abdichten zylindrisch gekrümmter, in bezug auf die Dichtung bewegter Flächen, mit einem annähernd schraubenlinienartig verlaufenden, im Bereich der Anlage an die Gegenfläche abgeflachten, mehrfach umgewundenen, elastischen Dichtungselement, das in eine Nut in einer der Flächen eingelegt ist.

Durch die SU-PS 804 965 wurde ein schraubenlinienartig verlaufendes Dichtungselement zwischen einem Kolben und einer Zylinderwand bekannt, wobei das Dichtungselement dabei in einer Ringnut der Kolbenwand lagert und an der Kolbenwand elastisch anliegt. Das Dichtungselement selbst besitzt dabei schraubenlinienartig verlaufende, mehrfach umgewundene Schraubflächen. Dieses Dichtelement kann jedoch nur in einer Druckrichtung abdichtend wirken. Bei Auftreten eines Druckes in der anderen Richtung wird das Dichtelement von der Dichtfläche abgehoben, so daß zwischen den Seitenwandungen der Nut und dem Dichtelement Medium hindurchtreten kann. Es handelt sich somit um eine Anordnung, die nur in einer Richtung als Dichtung, in der anderen Richtung jedoch als Ventil wirksam ist. Durch die AU-PS 34989/78 wurde eine Kolbendichtung bekannt, bei der die Abdichtung offenbar durch ein Dichtlabyrinth erreicht werden soll, so daß kein gesondertes Dichtelement Verwendung findet. Das Labyrinth in Form von einander überschneidenden schraubenförmigen Nuten zwischen Ringnuten in achsnormalen Ebenen ist im Kolben bzw. in der Wandung der Kolbenstangenführung angeordnet.

Der Erfindung liegt die Aufgabe zugrunde, eine Dichtungsanordnung der eingangs erwähnten Art so zu gestalten, daß in beiden Richtungen eine einwandfreie Abdichtung erzielt wird. Hiezu ist erfindungsgemäß vorgesehen, daß die Nut des Kolbens annähernd, wie an sich bekannt, schraubenlinienartig verlaufend, in mehrfacher Weise umlaufend ausgebildet ist, und daß vorzugsweise die Wandungen der Nut aneinander anschließend ausgebildet sind. Solcherart ist es ausgeschlossen, daß bei einem Druckwechsel zwischen dem Dichtelement oder - besser gesagt - der Windung des Dichtelementes und den Nutwandungen ein Medium hindurchtreten kan. Diese Wirkung wird dabei in beiden Druckrichtungen erzielt. Dem bewegten Teil wird möglichst wenig Reibungswiderstand entgegengesetzt.

Thermische Probleme, die am Kolben auftreten können, können leicht ausgeglichen werden, da der elastische Teil innerhalb der entsprechenden Nut wandern kann, u. zw. in Richtung des Verlaufes der Nut, da der elastische Teil innerhalb der Nut verschiebbar ist. Es kann somit der elastische Teil innerhalb der Nut zumindest über weite Bereiche seines Verlaufes wandern. Weiters kann dadurch die Passung zwischen Zylinder und Kolbenmantel bzw. zwischen Dichtungsträger und innerhalb desselben bewegter Stange sehr eng gestaltet werden, wodurch die erfindungsgemäße Dichtung sehr gute Führungseigenschaften ergibt, insbesondere dann, wenn der elastische Teil aus Lagermaterial, z.B. Kunststoff oder Bronze, gefertigt ist.

Vorteilhafterweise können die Wandungen der Nut zur Gegenfläche des Zylinders hin divergierend ausgebildet sein, wobei der in die Nut eingreifende Bereich des Dichtelementes im Querschnitt dem Nutquerschnitt entspricht. Dadurch ergibt sich eine sehr gute dichtende Anlage des elastischen Teiles am Kolben bzw. am Träger der Dichtung, da dadurch eine flächige Anlage zwischen dem elastischen Teil und dem Dichtungsträger gegeben ist.

Weiters können die Windungen des Dichtelementes mit dem über die Nut hinausrangenden Bereich aneinander anliegen. Hiedurch wird die Dichtwirkung insofern verbessert, als ein Durchtritt von Medium, wie er z.B. bei Labyrinthdichtungen zwischen den einzelnen Dichtteilen möglich ist, ausgeschaltet wird. Schließlich kann das Dichtelement durch einen in eine Ausnehmung der Nut ragenden Vorsprung gegen Verdrehen gesichert sein. Dies verhindert, daß sich bei längerem Gebrauch der elastische Teil aus der schraubenlinienartig verlaufenden Nut herausdrehen kann. Wenn die Verdrehsicherung nur an einer Stelle des Verlaufes des elastischen Teiles vorgesehen ist, dann ist der elastische Teil in seiner Dehnungs- und Zusammenziehungsbewegung in Richtung seines Verlaufes nicht behindert, da der Teil eben in seinem Verlauf nur an einer einzigen Stelle festgehalten ist und in seinen übrigen Bereichen, ausgehend von dem Sicherungsbereich, frei bewegbar ist.

In der Zeichnung ist ein Ausführungsbeispiel des Erfindungsgegenstandes dargestellt.

Fig. 1 zeigt einen Axialschnitt durch einen Zylinder, der mit der erfindungsgemäßen Dichtungsanordnung ausgestattet ist.

Fig. 2 zeigt eine Detaildarstellung der Dichtungsanordnung, u. zw. im Bereich der Anlage des dichtenden Teiles an der Gegendichtfläche.

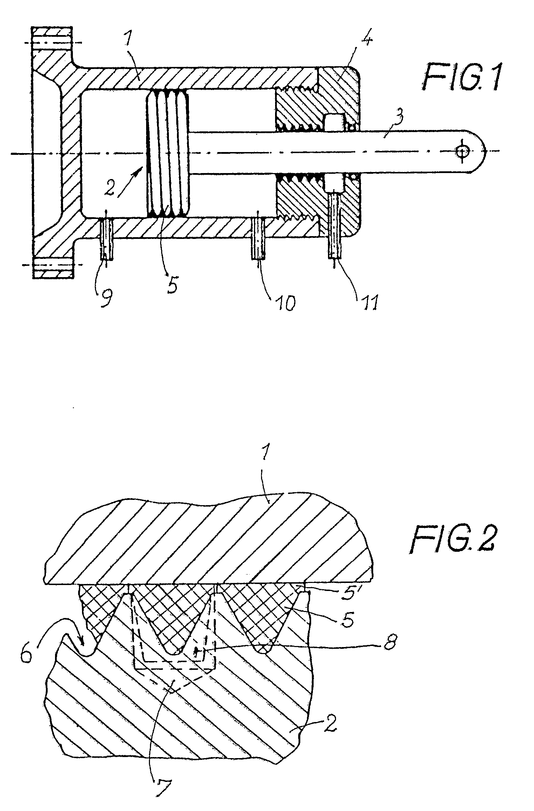

In einem Zylinder 1 ist ein Kolben 2 mittels einer Kolbenstange 3 in Axialrichtung verschiebbar. Die Kolbenstange 3 ist dabei durch den Zylinderdeckel 4 dichtend hindurchgeführt. Am Kolben 2 ist ein etwa schraubenlinienartig verlaufender elastischer Teil 5 herumgewunden, der in eine gleichfalls etwa schraubenlinienartig verlaufende, mehrfach umlaufende Nut 6 (Fig. 2) eingelegt ist, wobei auch der elastische Teil 5 mehrfach umgewunden ist und bevorzugt etwa den gesamten Nutenverlauf ausfüllt. Im Verlauf der Nut 6 ist eine Ausnehmung 7 vorgesehen, in welche ein Vorsprung 8 des elastischen Teiles eingreift. Diese lokale Ausnehmung wirkt dabei mit diesem Vorsprung 8 so zusammen, daß der die Dichtung bildende elastische Teil 5 in bezug auf den Kolben 2 gegen ein Verdrehen gesichert ist, wobei jedoch thermische Ausdehnungen des elastischen Teiles 5 nicht behindert sind. Die Wandungen der einzelnen Windungen der Nut 6 schließen dabei mehr oder weniger direkt aneinander an, wobei bei zur Gegenfläche der Dichtung hin divergierenden Wandungen der Nutenquerschnitt annähernd Dreiecksform aufweisen kann. Der elastische Teil 5 weist dabei in seinem in die Nut 6 eingreifenden Bereich gleichen Querschnitt wie die Nut 6 auf, so daß die Nut 6 durch den elastischen Teil 5 völlig ausgefüllt ist. Mit seinem über die Nuten 6 hinausragenden Bereich 5' erstreckt sich der elastische Teil 5 über den Übergangsbereich zwischen den aneinander anliegenden Wandungen, so daß die über die Nuten 6 hinausragenden Bereiche 5' der einzelnen Windungen des elastischen Teiles 5 aneinander anliegen. Im Bereich der Anlage an der Gegenfläche ist der elastische Teil 5 abgeflacht, u. zw. vorzugsweise -wie aus Fig. 2 hervorgeht - wobei eine annähernd zylindermantelförmige Dichtfläche entsteht

Die Dichtung zwischen Zylinderdeckel 4 und Kolbenstange 3 ist analog ausgebildet, wobei die Dichtung in eine entsprechende Nut im Deckel 4 eingelegt ist, wobei die zylindrische Dichtfläche des elastischen Teiles eine zylindrische Innenmantelfläche bildet, an welcher der Mangel der Kolbenstange 3 entlang gleitet.

Aus Fig. 2 ersichtlich, ist dann der Kolben 2 durch den Zylinderdeckel 4 gebildet und die Zylinderwandung 1 entspricht der Außenwandung der Kolbenstange 3.

Mit 9 und 10 sind zu den einzelnen Zylinderräumen führende Anschlußstutzen bezeichnet, und mit 11 jener Anschlußstutzen, über welchen Leckflüssigkeit im Bereich der Dichtung zwischen Zylinderdeckel und Kolbenstange abgeführt werden kann.

Bei entsprechender Wahl des elastischen Teiles 5, z.B. bei Ausbildung desselben aus Lagermaterial, wie Kunststoff oder Bronze, können die Dichtungen im Bereich des Kolbens 2 und im Bereich der Kolbenstange 3 als Führungslager für die Kolbenstange 3 dienen, welche aufgrund der möglichen geringen Passung zwischen Zylinder 1 und Kolbenmantel bzw. zwischen Zylinderdeckel 4 und Kolbenstange 3 hohe axiale Beanspruchungen im Bereich der Dichtungen aufnehmen können.

**Patentansprüche**

1. Dichtungsanordnung zum Abdichten zylindrisch gekrümmter, in bezug auf die Dichtung bewegter Flächen, mit einem annähernd schraubenlinienartig verlaufenden, im Bereich der Anlage an die Gegenfläche abgeflachten, mehrfach umgewundenen, elastischen Dichtungselement, das in eine Nut in einer der Flächen eingelegt ist, dadurch gekennzeichnet, daß die Nut (6) des Kolbens (2) annähernd, wie an sich bekannt, schraubenlinienartig verlaufend, in mehrfacher Weise umlaufend ausgebildet ist, und daß vorzugsweise die Wandungen der Nut (6) aneinander anschließend ausgebildet sind.

2. Dichtungsanordnung nach Anspruch 1, dadurch gekennzeichnet, daß die Wandungen der Nut (6) zur Gegenfläche des Zylinders (1) hin divergierend ausgebildet sind, wobei der in die Nut (6) eingreifende Bereich des Dichtelementes (5) im Querschnitt dem Nutquerschnitt entspricht.

3. Dichtungsanordnung nach Anspruch 2, dadurch gekennzeichnet, daß die Windungen des Dichtelementes (5) mit dem über die Nut (6) hinausragenden Bereich (5') aneinander anliegen.

4. Dichtungsanordnung nach einem der Ansprüche 1 bis 3, dadurch gekennzeichnet, daß das Dichtelement (5) durch einen in eine Ausnehmung (7) der Nut (6) ragenden Vorsprung (8) gegen Verdrehen gesichert ist.

FIG.1

FIG.2

**Europäisches Patentamt**

**EUROPÄISCHER RECHERCHENBERICHT**

Nummer der Anmeldung

EP 88 89 0242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 023 146 (ACONCAGUA) <br> * Seite 6, Zeile 39 - Seite 7, Zeile 28; Figur 8 * <br> ----- | 1-3 | F 16 J 9/04 <br> F 16 C 33/26 |

RECHERCHIERTE SACHGEBIETE (Int. Cl.4)

F 16 J
F 16 C

Der vorliegende Recherchenbericht wurde für alle Patentansprüche erstellt

| Recherchenort | Abschlußdatum der Recherche | Prüfer |
|---|---|---|
| DEN HAAG | 15-12-1988 | LEGER M.G.M. |